# EUROPÄISCHE PATENTSCHRIFT

(11) **EP 1 330 325 B1**
(45) Veröffentlichungstag und Bekanntmachung des Hinweises auf die Patenterteilung: **21.06.2006**
(21) Anmeldenummer: 01935971.0
(22) Anmeldetag: 14.04.2001
(51) Int. Cl.: B23D 61/12

(54) **SÄGEBLATT FÜR HANDWERKZEUGMASCHINEN**
SAW BLADE FOR HAND-HELD TOOLS
LAME DE SCIE POUR MACHINES-OUTILS A MAIN

(30) Priorität: 03.08.2000 DE 10037809
(43) Veröffentlichungstag der Anmeldung: 30.07.2003
(73) Patentinhaber: ROBERT BOSCH GMBH, 70442 Stuttgart (DE)
(72) Erfinder: KOCHER, Martin, CH-4500 Solothurn (CH); GROLIMUND, Daniel, CH-4528 Zuchwil (CH)
(86) Internationale Anmeldenummer: PCT/DE2001/001468
(87) Internationale Veröffentlichungsnummer: WO 2002/011934

(56) Entgegenhaltungen:
- DE-A- 2 753 509
- GB-A- 211 098
- US-A- 964 602

## Beschreibung

### Stand der Technik

Die Erfindung betrifft ein Sägeblatt für Handwerkzeugmaschinen, insbesondere für Motorhandhubsägen, wie z.B. Säbel- oder Stichsägen, der im Oberbegriff des Anspruchs 1 definierten Gattung (siehe z.B. DE-A-27 53 509).

Bekannte Sägeblätter dieser Art haben über.die Länge der Verzahnung eine einheitliche Zahnbreite, die durch die Dicke des Sägeblatts vorgegeben ist. Die Sägezähne sind zum Freischneiden des Sägeblatts im Werkstück geschränkt, so daß die Zahnspitzen wechselweise seitlich geringfügig über die Kontur des Blattrückens überstehen. Für den harten, groben Einsatz werden dabei stabile Sägeblätter bis 1,6 mm Dicke eingesetzt, wobei mit zunehmender Sägeblattdicke die Schnitt-und Standzeiten der Sägeblätter abnehmen.

### Vorteile der Erfindung

Das erfindungsgemäße Sägeblatt hat den Vorteil, daß durch die partielle Verringerung einzelner Sägezähne, Sägezahnpaare oder Sägezahngruppen trotz dickem und stabilem Sägeblatt sehr gute Schnitt- und Standzeiten des Sägeblatt erreicht werden. Die Zerspanungskräfte werden optimiert und die Wärmeentwicklung am Sägeblatt beim Sägen reduziert.

Durch die in den weiteren Ansprüchen aufgeführten Maßnahmen sind vorteilhafte Weiterbildungen und Verbesserungen des im Anspruch 1 angegebenen Sägeblatts möglich.

Gemäß einer vorteilhaften Ausführungsform der Erfindung entspricht die Zahnbreite der Sägezähne in den einen Abschnitten der Verzahnung der Dicke des Blattrückens, während die davon abweichende Zahnbreite der Sägezähne in den anderen Abschnitten der Verzahnung durch Materialabtrag oder Materialverdichtung, z.B. Prägen, herbeigeführt ist. Hierzu werden auf beiden Seiten des Blattrückens voneinander beabstandete Aussparungen in den Blattrücken eingebracht, die über die Sägezähne hinweg bis zu der vom Blattrücken abgekehrten Unterseite der Verzahnung reichen, wobei die Aussparungen auf der einen Seite des Blattrückens zu den Aussparungen auf der anderen Seite des Blattrückens in Längsrichtung des Sägeblatts zueinander versetzt angeordnet sind.

Gemäß alternativer Ausführungsformen der Erfindung sind dabei die Aussparungen bis zu der von der Verzahnung abgekehrten. Oberkante des Blattrückens geführt oder enden mit Abstand vor dieser Oberkante.

Gemäß einer vorteilhaften Ausführungsform der Erfindung sind die Aussparungen gegenüber der Verzahnung um einen spitzen Winkel in Vorschubrichtung des Sägeblatts geneigt, der vorzugsweise dem Spanwinkel der Sägezähne entspricht. Durch die schrägen Kanten der von den Aussparungen gebildeten Kanäle stellt sich aufgrund der Reibkräfte eine zusätzliche Vorschubkraft gegen das Werkstück ein.

### Zeichnung

Die Erfindung ist anhand von in der Zeichnung dargestellten Ausführungsbeispielen in der nachfolgenden Beschreibung näher erläutert. Es zeigen:
- Fig. 1: eine Seitenansicht eines Sägeblatts für eine Motorhandhubsäge,
- Fig. 2: einen Schnitt längs der Linie II - II in Fig. 1, vergrößert dargestellt,
- Fig. 3: ausschnittweise eine Unteransicht des Sägeblatts in Richtung-III in Fig. 1, vergrößert dargestellt,
- Fig. 4: ausschnittweise eine Seitenansicht eines Sägeblatts gemäß einem weiteren Ausführungsbeispiel,
- Fig. 5: einen Schnitt längs der Linie V - V in Fig. 4, vergrößert dargestellt,
- Fig. 6: ausschnittweise eine Seitenansicht eines Sägeblatts gemäß einem dritten Ausführungsbeispiel,
- Fig. 7: einen Schnitt längs der Linie VII - VII in Fig. 6, vergrößert dargestellt.

### Beschreibung der Ausführungsbeispiele

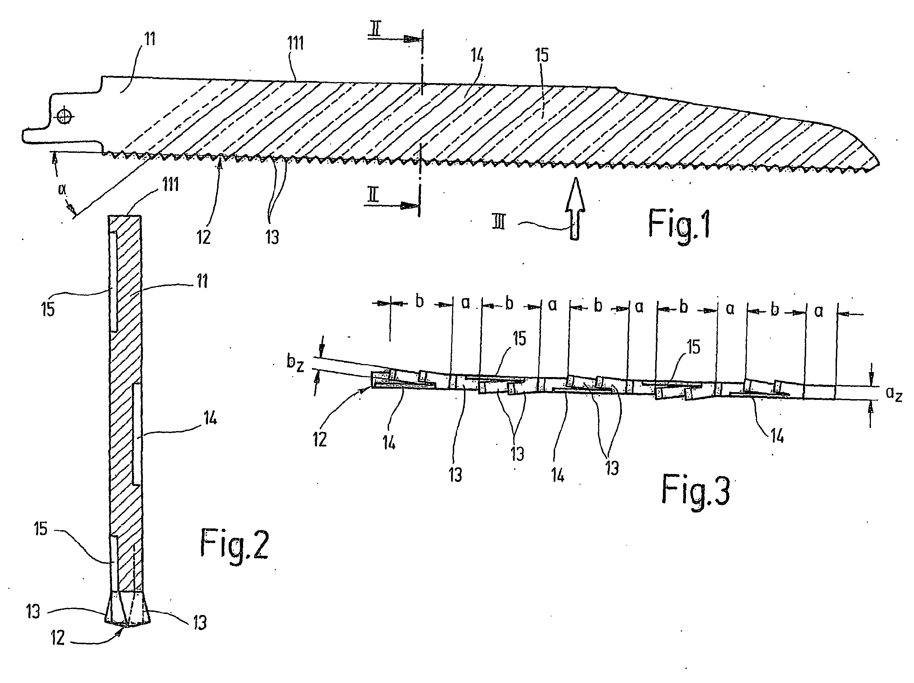

Das in Fig. 1 in Seitenansicht dargestellte Sägeblatt für eine Motorhandhubsäge (Säbelsäge, Stichsäge oder dgl.) als Ausführungsbeispiel für eine allgemeine Handwerkzeugmaschine weist einen Blattrücken 11 und eine längs dessen Unterkante verlaufende Verzahnung 12 aus einer Vielzahl hintereinander aufgereihter Sägezähne 13 auf. In aufeinanderfolgenden Abschnitten a und b (Fig. 3) der Verzahnung 12 mit jeweils einer ganzzahligen Anzahl von Sägezähnen 13 sind die Sägezähne 13 mit gleicher, aber gegenüber den Sägezähnen 13 in dem vorausgegangenen oder nachfolgenden Abschnitt b bzw. a der Verzahnung 12 mit unterschiedlicher Zahnbreite a_{z} bzw. b_{z} ausgebildet. Im Ausführungsbeispiel der Fig. 1 - 3 umfassen die Abschnitte a der Verzahnung 12 jeweils einen Sägezahn 13 und die Abschnitte b der Verzahnung 12 jeweils zwei Sägezähne 13. Die Zahnbreite a_{z} der Sägezähne 13 in den Abschnitten a entspricht der Dicke des Blattrückens 11, während die Zahnbreite b_{z} der Sägezähne 13 in den Abschnitten b demgegenüber kleiner ist und durch Materialabtrag oder Materialverdichtung herbeigeführt ist. Dabei ist der Materialabtrag bzw. die Materialverdichtung in aufeinanderfolgenden Abschnitten b der Verzahnung 12, die die Sägezähne 13 mit reduzierter Zahnbreite b_{z} aufweisen, abwechselnd von der einen und anderen Seite des Blattrückens 11 vorgenommen. Hierzu sind auf beiden Seiten des Blattrückens 11 voneinander gleich beabstandete Aussparungen 14 bzw. 15 eingebracht, die über die Sägezähne 13 hinweg bis zu der vom.Blattrücken 11 abgekehrten Unterseite der Verzahnung 12 reichen. Die Aussparungen 14 auf der einen Seite des Blattrückens 11 sind zu den Aussparungen 15 auf der anderen Seite des Blattrückens 11 in Längsrichtung des Sägeblatts zueinander versetzt angeordnet.

Im Ausführungsbeipiel des Sägeblatts gemäß Fig. 1 - 3 erstrecken sich die Aussparungen 14 bzw. 15 bis.zu der von der Verzahnung 12 abgekehrten Oberkante 111 des Blattrückens 11 und sind um einen spitzen Winkel α (Fig. 1) in Vorschubrichtung des Sägeblatts gegenüber der Verzahnung 12 geneigt. Der Winkel α entspricht dem Spanwinkel der Sägezähne 13.

Nach dem Einbringen der Aussparungen 14, 15 zur Reduzierung der Sägezähne 13 auf die Zahnbreite b_{z} werden die Sägezähne 13 mit verringerter Zahnbreite b_{z} in jedem Abschnitt b der Verzahnung geschränkt, wobei die Schränkung zu der von der Aussparung 14 bzw. 15 abgekehrten Seite des Blattrückens 11 hin vorgenommen wird. Insgesamt sind damit die Sägezähne 13 in aufeinanderfolgenden Abschnitten b der Verzahnung 12 in entgegengesetzen Richtungen geschränkt. Der in den Abschnitten a der Verzahnung 12 vorhandene Sägezahn 13 mit der Zahnbreite a_{z} ist nicht geschränkt und fluchtet mit den Seitenkonturen des Blattrückens 11.

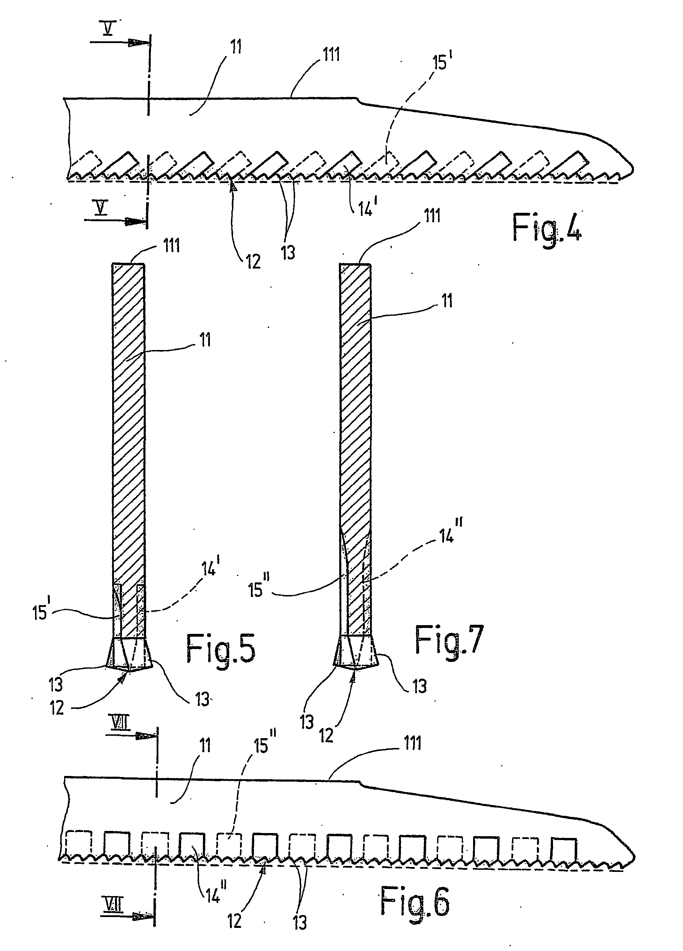

Das in Fig. 4 und 5 dargestellte zweite Ausführungsbeispiel des Sägeblatts unterscheidet sich von dem zuvor beschriebenen Sägeblatt lediglich dadurch, daß die Sägezähne 13 auf die Zahnbreite b_{z} reduzierenden Aussparungen 14', 15' in den beiden voneinander abgekehrten Seiten des Blattrückens 11 sich nicht über die volle Höhe des Blattrückens 11 erstrecken, sondern mit relativ großem Abstand vor der Oberkante 111 des Blattrückens 11 enden. Die Aussparungen 14', 15' sind wiederum geneigt zur Verzahnung 12 angeordnet, wobei die Neigungsrichtung und der Neigungswinkel entsprechend Fig. 1 gewählt sind..

Bei dem dritten Ausführungsbeispiel eines Sägeblatts gemäß Fig. 6 und 7 enden die Aussparungen 14" bzw. 15'' auf den beiden Blattseiten des Blattrückens 11 ebenfalls mit großem Abstand von der Oberkante 111 des Blattrückens 11. Die wie in den beiden vorstehend beschriebenen Ausführungsbeispielen in gleicher Weise-äquidistant angeordneten Aussparungen 14" bzw. 15 " verlaufen aber jetzt rechtwinklig zur Längserstreckung der Verzahnung 12. Auch hier sind die Aussparungen 14" auf der einen Seite des Blattrückens 11, die einen gleichen Abstand voneinander haben, gegenüber den Aussparungen 15" auf der anderen Seite des Blattrückens 11, die mit gleichem Abstand voneinander angeordnet sind, versetzt, wobei der Versatz dem halben Abstand zwischen den Aussparungen 14 bzw. zwischen den Aussparungen 15" entspricht.

Die Erfindung ist nicht auf die beschriebenen Ausführungsbeispiele des Sägeblatts beschränkt. So können in den Abschnitten a und b der Verzahnung 12 mehr als ein bzw. zwei Sägezähne 13 angeordnet sein. Auch ist es nicht zwingend, daß alle Abschnitte a und/oder b der Verzahnung 12 jeweils die gleiche Anzahl von Sägezähnen 13 enthalten. Vielmehr kann die Sägezahnzahl innerhalb der Abschnitte a und/oder innerhalb der Abschnitte b variieren. Die Aussparungen 14 bzw. 15, die den Abschnitten b der Verzahnung zugeordnet sind, müssen dann in ihrer Breite entsprechend variiert werden.

Das Sägeblatt muß nicht als einseitig in eine Motorhandhubsäge einspannbares Sägeblatt ausgeführt sein. Es kann auch an beiden Blattenden mit Einspannmitteln zur Aufnahme in einer handgeführten Motorbügelsäge als weiteres Ausführungsbeispiel einer Handwerkzeugmaschine versehen sein.

## Patentansprüche

1. Sägeblatt für Motorhandhubsägen mit einem Blattrücken (11) und einer längs dessen Unterseite verlaufenden Verzahnung (12) aus einer Vielzahl hintereinander aufgereihter Sägezähne (13), wobei in aufeinander folgenden Abschnitten (a, b) der Verzahnung (12) mit jeweils einer ganzzahligen Anzahl von Sägezähnen (13) die Sägezähne (13) mit gleicher, aber gegenüber den Sägezähnen (13) im vorausgehenden oder nachfolgenden Abschnitt (b, a) der Verzahnung (12) unterschiedlicher Zahnbreite (a_{z} b_{z}) ausgebildet sind, **dadurch gekennzeichnet, dass** die Zahnbreite (a_{z}) der Sägezähne (13) in den einen Abschnitten (a) der Verzahnung (12) der Dicke des Blattrückens (11) entspricht und die davon abweichende Zahnbreite (b_{z}) der Sägezähne in den anderen Abschnitten (b) bei der Verzahnung (12) durch Materialabtrag oder Materialverdichtung herbeigeführt ist und wobei aufeinander folgende Abschnitte (a, b) der Verzahnung (12) abwechselnd einen Zahn mit großer Zahnbreite (a_{z}) und zwei Zähne (13) mit reduzierter Zahnbreite (b_{z}) aufweisen.

2. Sägeblatt nach Anspruch 1, **dadurch gekennzeichnet, daß** der Materialabtrag oder die Materialverdichtung in aufeinanderfolgenden Abschnitten (b) der Verzahnung (12) mit die reduzierte Zahnbreite (b_{z}) aufweisenden Sägezähnen (13) abwechselnd von der einen und anderen Seite des Blattrückens (11) her vorgenommen ist.

3. Sägeblatt nach Anspruch 2, **dadurch gekennzeichnet, daß** die Sägezähne (13) mit reduzierter Zahnbreite (b_{z}) geschränkt sind und die Schränkung zu der von dem Materialabtrag oder der Materialverdichtung abgekehrten Seite des Blattrückens (11) hin vorgenommen ist.

4. Sägeblatt nach einem der Ansprüche 2 oder 3, **dadurch gekennzeichnet, daß** auf beiden Seiten des Blattrückens (11) in den Blattrücken (11) voneinander beabstandete, parallele Aussparungen (14, 15; 14', 15'; 14'', 15'') eingebracht sind, die über die Sägezähne (13) hinweg bis zu der vom Blattrücken (11) abgekehrten Unterseite der Verzahnung (12) reichen, und daß die Aussparungen (14) auf der einen Seite des Blattrückens (11) und die Aussparungen (15) auf der anderen Seite des Blattrückens (11) in Längsrichtung des Sägeblatts zueinander versetzt angeordnet sind.

5. Sägeblatt nach Anspruch 4, **dadurch gekennzeichnet, daß** die Aussparungen (14, 15) bis zu der von der Verzahnung (12) abgekehrten Oberkante (111) des Blattrückens (11) geführt sind.

6. Sägeblatt nach Anspruch 4, **dadurch gekennzeichnet, daß** die Aussparungen (14', 15'; 14'', 15'') mit Abstand vor der von der Verzahnung (12) abgekehrten Oberkante (111) des Blattrückens (11) enden.

7. Sägeblatt nach einem der Ansprüche 4-6, **dadurch gekennzeichnet, daß** die Aussparungen (14, 15; 14', 15') gegenüber der Verzahnung (12) unter einem spitzen Winkel (α) in Vorschubrichtung des Sägeblatts (11) geneigt sind und vorzugsweise daß der spitze Winkel (α) dem Spanwinkel der Sägezähne (13) entspricht.

8. Sägeblatt nach einem der Ansprüche 4-7, **dadurch gekennzeichnet, daß** die Aussparungen (14, 15; 14', 15'; 14", 15") vor dem Schränken der Sägezähne (13) in den Blattrücken (11) und die Verzahnung (12) eingeschnitten sind.

## Claims

1. Saw blade for motor-operated hand-held reciprocating saws, having a blade back (11) and a tooth system (12) which runs along the underside of said blade back (11) and consists of a multiplicity of saw teeth (13) lined up one behind the other, the saw teeth (13) being designed with the same tooth width (a_{z}, b_{z}) in successive sections (a, b) of the tooth system (12) having in each case an integral number of saw teeth (13), but this tooth width (a_{z}, b_{z}) being different relative to the saw teeth (13) in the preceding or following section (b, a) of the tooth system (12), **characterized in that** the tooth width (a_{z}) of the saw teeth (13) in some of the sections (a) of the tooth system (12) corresponds to the thickness of the blade back (11), and the tooth width (b_{z}), differing therefrom, of the saw teeth in the other sections (b) in the tooth system (12) is produced by material removal or material compaction, successive sections (a, b) of the tooth system (12) alternately having a tooth with a large tooth width (a_{z}) and two teeth (13) with a reduced tooth width (b_{z}).

2. Saw blade according to Claim 1, **characterized in that** the material removal or the material compaction in successive sections (b) of the tooth system (12) with saw teeth (13) having the reduced tooth width (b_{z}) is carried out alternately from the one and the other side of the blade back (11).

3. Saw blade according to Claim 2, **characterized in that** the saw teeth (13) with reduced tooth width (b_{z}) are set, and the setting is carried out towards that side of the blade back (11) which faces away from the material removal or the material compaction.

4. Saw blade according to either of Claims 2 and 3, **characterized in that** spaced-apart, parallel recesses (14, 15; 14', 15' ; 14", 15") are incorporated in the blade back (11) on both sides of the latter, these recesses (14, 15; 14', 15'; 14*''* , 15*''*) extending across the saw teeth (13) up to the underside, facing away from the blade back (11), of the tooth system (12), and **in that** the recesses (14) on the one side of the blade back (11) and the recesses (15) on the other side of the blade back (11) are arranged offset from one another in the longitudinal direction of the saw blade.

5. Saw blade according to Claim 4, **characterized in that** the recesses (14, 15) are directed up to the top edge (111), facing away from the tooth system (12), of the blade back (11).

6. Saw blade according to Claim 4, **characterized in that** the recesses (14', 15'; 14", 15") end at a distance from the top edge (111), facing away from the tooth system (12), of the blade back (11).

7. Saw blade according to one of Claims 4 to 6, **characterized in that** the recesses (14, 15; 14', 15') are inclined at an acute angle (α) relative to the tooth system (12) in the feed direction of the saw blade (11), and preferably **in that** the acute angle (α) corresponds to the rake angle of the saw teeth (13).

8. Saw blade according to one of Claims 4 to 7, **characterized in that** the recesses (14, 15; 14', 15'; 14" , 15") are cut into the blade back (11) and the tooth system (12) before the setting of the saw teeth (13) .

## Revendications

1. Lame de scie pour scies à métaux à main motorisées présentant un dos de lame (11) et une denture (12) qui se prolonge le long de son côté inférieur et qui se compose d'une pluralité de dents de scie (13) disposées les unes derrière les autres, les dents de scie (13) dans des segments (a, b) successifs de la denture (12) comportant respectivement un nombre entier de dents de scie (13), présentant une largeur de dent (a_{Z}, b_{Z}) identique mais différente à celle des dents de scie (13) du segment (b, a) précédent ou suivant de la denture (12),
**caractérisée en ce que**
la largeur de dent (a_{Z}) des dents de scie (13) des segments (a) de la denture (12) correspond à l'épaisseur du dos de lame (11), et la largeur différente (b_{Z}) des dents de scie des autres segments (b) est mise en oeuvre sur la denture (12) par enlèvement de matière ou compactage de matière, les segments (a, b) successifs de la denture (12) présentant en alternance une dent de grande largeur de dent (a_{Z}) et deux dents (13) de largeur de dent réduite (b_{Z}).

2. Lame de scie selon la revendication 1,
**caractérisée en ce que**
l'enlèvement ou le compactage de matière opéré dans les segments (b) de la denture (12) consécutifs comportant les dents de scie (13) de largeur de dent de scie réduite (b_{Z}) est réalisé en alternance d'un côté et de l'autre du dos de lame (11).

3. Lame de scie selon la revendication 2,
**caractérisée en ce que**
les dents de scie (13) de largeur de dent de scie réduite (b_{Z}) sont avoyées et l'avoyage est réalisé du côté du dos de lame (11) détourné de l'enlèvement ou du compactage de matière.

4. Lame de scie selon l'une des revendications 2 ou 3,
**caractérisée en ce que**
des évidements parallèles (14, 15 ; 14', 15' ; 14" ; 15") espacés les uns des autres pratiqués dans le dos de lame (11) des deux côtés du dos de lame (11), vont jusqu'au côté inférieur de la denture (12) détourné du dos de lame (11) en passant les dents de scie (13), et les évidements (14) d'un côté du dos de lame (11) et les évidements (15) de l'autre côté du dos de lame (11) sont décalés les uns des autres dans la direction longitudinale de la lame de scie.

5. Lame de scie selon la revendication 4,
**caractérisée en ce que** les évidements (14, 15) se prolongent jusqu'au bord supérieur (111) du dos de lame (11) détourné de la denture (12).

6. Lame de scie selon la revendication 4,
**caractérisée en ce que** les évidements (14', 15' ; 14" ; 15") se terminent par un espacement les séparant du bord supérieur (111) du dos de lame (11) détourné de la denture (12).

7. Lame de scie selon l'une des revendications 4 à 6,
**caractérisée en ce que** les évidements (14, 15 ; 14' ; 15') sont orientés par rapport à la denture (12) suivant un angle aigu (α) dans la direction d'avancement de la lame de scie (11), et de préférence l'angle aigu (α) correspond à l'angle de coupe des dents de scie (13).

8. Lame de scie selon l'une des revendications 4 à 7,
**caractérisée en ce que**
les évidements (14, 15 ; 14', 15' ; 14" ; 15") sont taillés avant l'avoyage des dents de scie (13) dans le dos de lame (11) et la denture (12).
